(19)

Europäisches
Patentamt
European
Patent Office
Office européen
des brevets

(11) **EP 1 859 934 A1**

(12) **EUROPEAN PATENT APPLICATION**
published in accordance with Art. 158(3) EPC

(43) Date of publication:
**28.11.2007 Bulletin 2007/48**

(21) Application number: **06715529.1**

(22) Date of filing: **10.03.2006**

(51) Int Cl.:
**B32B 27/30** (2006.01)  **B29C 47/06** (2006.01)
**B32B 1/08** (2006.01)  **C08F 214/18** (2006.01)

(86) International application number:
**PCT/JP2006/304759**

(87) International publication number:
**WO 2006/095857 (14.09.2006 Gazette 2006/37)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **10.03.2005 JP 2005068105
22.11.2005 JP 2005337789**

(71) Applicant: **DAIKIN INDUSTRIES, LTD.
Osaka-shi, Osaka 530-8323 (JP)**

(72) Inventors:
• **KITAHARA, Takahiro
Nishihitotsuya, Settsu-shi, Osaka, 56685 (JP)**

• **SHIMONO, Takeshi
Nishihitotsuya, Settsu-shi, Osaka, 56685 (JP)**
• **AOYAMA, Takahisa
Nishihitotsuya, Settsu-shi, Osaka, 56685 (JP)**
• **SAKAKIBARA, Shingo
ishihitotsuya, Settsu-shi, Osaka, 566858 (JP)**

(74) Representative: **HOFFMANN EITLE
Patent- und Rechtsanwälte
Arabellastrasse 4
81925 München (DE)**

(54) **CHLOROTRIFLUOROETHYLENE COPOLYMER CONTAINING LAMINATE AND PROCESS FOR PRODUCTION THEREOF**

(57)  The present invention provides a CTFE copolymer-containing laminate produced by coextrusion molding of a PFA and/or FEP layer and a CTFE copolymer layer with the thermal degradation of the latter layer being suppressed and the liquid chemical impermeability and gas barrier properties, among others, being improved as well as a method of producing the same. The present invention is a chlorotrifluoroethylene copolymer-containing laminate having a layer (A) comprising a tetrafluoroethylene/perfluoro(vinyl ether) copolymer and/or a tetrafluoroethylene/hexafluoropropylene copolymer and a layer (B) comprising a chlorotrifluoroethylene copolymer, the layer (A) and the layer (B) being formed by coextrusion molding under a condition such that the temperature of a flow path (pa) through which a layer (A)-forming material (a) flows is 300 to 400°C and the temperature of a flow path (pb) through which a layer (B)-forming material (b) flows is 250 to 350°C prior to the material (a) and the material (b) coming into contact with each other in a multilayer die.

EP 1 859 934 A1

**Description**

TECHNICAL FIELD

The present invention relates to a chlorotrifluoroethylene copolymer-containing laminate and a method of producing the same.

BACKGROUND ART

Tubes and like moldings made of a tetrafluoroethylene/perfluoro(vinyl ether) copolymer [PFA] or tetrafluoroethylene/hexafluoropropylene [FEP] have chemical resistance and hardly contaminate liquids passing therethrough and, therefore, those polymers have so far been used as materials for piping for transferring high-purity liquids and as lining materials for storage tanks, in particular as materials for piping in semiconductor manufacturing equipment. However, PFA tubes and FEP tubes have a problem in that they are high in liquid chemical permeability.

As means for improving the liquid chemical impermeability, there may be mentioned polychlorotrifluoroethylene [PCTFE] as a material for outer casings to be formed in close contact with the existing PFA tubes, FEP tubes and the like (cf. e.g. Patent Document 1: Japanese Kokai (Laid-open) Publication H09-137900). However, while such laminates are preferably formed by coextrusion molding, the PFA and FEP are high melting point and, on the other hand, PCTFE has a low melting point and is inferior in thermal stability and stress crack resistance in the step of molding and, therefore, there is a problem, namely PCTFE undergoes thermal degradation on the occasion of coextrusion molding and this leads to decreases in liquid chemical impermeability.

DISCLOSURE OF INVENTION

PROBLEMS WHICH THE INVENTION IS TO SOLVE

In view of the above-discussed state of the art, it is an object of the present invention to provide a CTFE copolymer-containing laminate produced by coextrusion molding of a PFA and/or FEP layer and a CTFE copolymer layer with the thermal degradation of the latter layer being suppressed and the liquid chemical impermeability and gas barrier properties, among others, being improved as well as a method of producing the same.

MEANS FOR SOLVING THE PROBLEMS

The present invention is a chlorotrifluoroethylene copolymer-containing laminate having a layer (A) comprising a tetrafluoroethylene/perfluoro(vinyl ether) copolymer and/or a tetrafluoroethylene/hexafluoropropylene copolymer and a layer (B) comprising a chlorotrifluoroethylene copolymer, the layer (A) and the layer (B) being formed by coextrusion molding under a condition such that the temperature of a flow path (pa) through which a layer (A)-forming material (a) flows is 300 to 400°C and the temperature of a flow path (pb) through which a layer (B)-forming material (b) flows is 250 to 350°C prior to the material (a) and the material (b) coming into contact with each other in a multilayer die.

The present invention is a method of producing a chlorotrifluoroethylene copolymer-containing laminate having a layer (A) comprising a tetrafluoroethylene/perfluoro(vinyl ether) copolymer and/or a tetrafluoroethylene/hexafluoropropylene copolymer and a layer (B) comprising a chlorotrifluoroethylene copolymer comprising the steps of:

(1) introducing a layer (A)-forming material (a), after kneading in an extruder and transfer to a multilayer die, into a flow path (pa) maintained at a flow path temperature of 300 to 400°C, and
(2) introducing a layer (B)-forming material (b), after kneading in an extruder different from the extruder and transfer to the multilayer die, into a flow path (pb) maintained at a flow path temperature of 250 to 350°C.
In the following, the invention is described in detail.

The chlorotrifluoroethylene [CTFE] copolymer-containing laminate according to the invention is a laminate having a tetrafluoroethylene [TFE]/perfluoro(vinyl ether) [PFVE] copolymer [PFA] and/or tetrafluoroethylene [TFE]/hexafluoropropylene [HFP] copolymer [FEP] layer (A) and a CTFE copolymer layer (B).
The layer (A) and layer (B) are formed by coextrusion molding.
The term "layer (A) and layer (B)" as used herein can include, within the meaning thereof, laminates comprising one or more layers (A) and one or more layers (B) as formed by coextrusion molding. Thus, the "layer (A) and layer (B)" may refer to a laminate comprising two layers (A) and one layer (B) formed by simultaneous coextrusion molding.
The CTFE copolymer-containing laminate of the invention is only required to comprise at least one layer (A) and at least one layer (B) and, thus, it may comprise, in addition to the layer (A) and layer (B), one or more layers comprising a PFA and/or FEP or one or more layers comprising a CTFE copolymer. Here, the "layer comprising a PFA and/or FEP" other than the layer (A) and the "layer comprising a CTFE copolymer" other than the layer (B) each may be a layer not formed by coextrusion molding; for example, it may be a "layer comprising a CTFE copolymer" prepared in advance and then bonded to a laminate a laminate comprising a layer (A) and a layer (B) as formed by coextrusion molding. However, the CTFE copolymer-containing laminate of the invention is preferably one comprising, as the above-mentioned "layer (A) and layer (B)", "layer (s) comprising a PFA and/or FEP" and "layer(s) comprising a CTFE copolymer" all formed by coextrusion molding.

In the practice of the invention, the layer (A) may be a layer comprising a PFA, a layer comprising a FEP, or a layer comprising a PFA and FEP.

In the CTFE copolymer-containing laminate of the invention, that portion constituted of one or more layers formed using a PFA and/or FEP which is formed by coextrusion molding is sometimes referred to herein as "layer portion (A)". The layer portion (A) may be constituted of one layer or two or more layers provided that each layer is a layer formed using a PFA and/or FEP. The layer or layers constituting the layer portion (A) correspond to the layer (A) mentioned above. In cases where the layer portion (A) is constituted of one layer, it may be one constituted of a layer comprising a PFA alone, or one constituted of a layer comprising a FEP alone, or one constituted of a layer comprising a PFA and FEP alone. In cases where the layer portion (A) is constituted of two or more layers, it may be one containing a layer(s) comprising a PFA and a layer(s) comprising a FEP, or one containing a layer (s) comprising a PFA and a layer (s) comprising a PFA/FEP, or one containing a layer(s) comprising a FEP and a layer (s) comprising a PFA/FEP, or one containing two or more layers comprising a PFA/FEP differing in PFA/FEP proportion from one another.

The two or more layers constituting the layer portion (A) may be in contact with one another or another layer (C) may be sandwiched between any two of them.

In the present specification, when another layer (C) is sandwiched between at least two layers among the two or more layers constituting the layer portion (A), the "layer portion (A)" does not include the layer (C). Thus, the layer portion (A) may be divided into two by the other layer (C).

In the practice of the invention, the layer (C) may include one layer or two or more layers. In cases where two or more layers (C) are sandwiched, the layer (C)-constituting layers may be identical or different in composition.

The other layer (C) sandwiched between at least two of the layers constituting the layer portion (A) is not particularly restricted but may be a layer (B) to be described later herein. When the layer (C) is such layer (B), that layer among the two or more layers constituting the layer portion (A) which is in contact with the layer (C) and that layer (C) preferably constitute a laminate formed by the technique of coextrusion molding to be described later herein.

The other layer (C) sandwiched between at least two layers constituting the layer portion (A) may also be a layer (exclusive of the layer (B)) comprising a fluoropolymer other than the above-mentioned "layer comprising a PFA and/or FEP" or a layer comprising a known thermoplastic resin such as a polyamide [PA] and, in these cases, the CTFE copolymer-containing laminate of the invention may be obtained (i) by forming, in the manner of lamination by coextrusion molding, that layer (A1) among the two or more layers constituting the layer portion (A) which is in contact with the layer (B) to be described later herein and the layer (B) and then bonding to the resulting laminate a laminate comprising one or a plurality of layers other than the above-mentioned layer (A1) in the layer portions (A) (in this paragraph, the "one or a plurality of layers other than the layer (A1)" are collectively referred to as "layer (A2)") and the above-mentioned layer (C) by the technique of lamination or (ii) by extruding, in the manner of lamination by the technique of coextrusion molding to be described later herein, the layer (A1) and layer (B) onto a laminate obtained from the above-mentioned layer (A2) and the above-mentioned layer (C) by the technique of lamination, for instance.

In the practice of the invention, the polymer constituting the above-mentioned "layer comprising a PFA" preferably comprises a PFA alone, the polymer constituting the "layer comprising a FEP" preferably comprises a FEP alone, and the polymer constituting the "layer comprising a PFA/FEP" preferably comprises a PFA and FEP alone.

In the practice of the invention, the above-mentioned "layer comprising a PFA", "layer comprising a FEP" and "layer comprising a PFA/FEP" may be a "layer comprising a PFA alone", a "layer comprising FEP alone" and a "layer comprising a PFA and FEP alone", respectively. These layers, however, may each contain such an additive(s) as mentioned later herein in addition to such polymers as a PFA and FEP.

In the practice of the invention, the PFA preferably has a melting point of 280 to 320°C, more preferably 280 to 310°C. The FEP preferably has a melting point of 230 to 280°, more preferably 240 to 270°C.

In the above-mentioned layer (A), the PFA is one obtained by copolymerizing at least TFE and a PFVE. The PFVE is preferably a perfluoro (alkyl vinyl ether) [PAVE]. As the PAVE, there may be mentioned perfluoro(methyl vinyl ether) [PMVE], perfluoro(ethyl vinyl ether) [PEVE], perfluoro(propyl vinyl ether) [PPVE] and perfluoro(butyl vinyl ether), among others. Among them, PMVE, PEVE or PPVE is preferred.

In the layer (A), the PFA may also be one obtained by copolymerizing another comonomer together with TFE and a PFVE, and the FEP may also be one obtained by copolymerizing another comonomer together with TFE and HFP. In the above-mentioned PFA and/or FEP, the other comonomer is not particularly restricted but may be any copolymerizable monomer and may comprise two or more species. However, the comonomer preferably comprises at least one species selected from the group consisting of ethylene [Et], vinylidene fluoride [VdF] and vinyl monomers represented by the general formula (I):

$$CX^3X^4=CX^1(CF_2)_nX^2 \qquad (I).$$

(In the above formula, $X^1$, $X^3$ and $X^4$ are the same or different and each represents hydrogen atom or fluorine atom, $X^2$ represents hydrogen atom, fluorine atom or chlorine atom, and n represents an integer of 1 to 10; provided that, in the case of FEP, the case where $X^1 = X^2 = X^3 = X^4 = F$ and n = 1 is excluded.)

The vinyl monomer represented by the above general formula (I) is not particularly restricted but may be, for example, HFP (in the case of a PFA), perfluoro(1,1,2-trihydro-1-hexene), perfluoro(1,1,5-trihydro-l-pentene) or the like. The other comonomer in the case of FEP may also be a PAVE represented by the general formula (II):

$$CF_2=CF-ORf^1 \qquad (II).$$

(In the above formula, $Rf^1$ represents a perfluoroalkyl group containing 1 to 8 carbon atoms.)
As the PAVE represented by the general formula (II), there may be mentioned perfluoro(methyl vinyl ether) [PMVE], perfluoro(ethyl vinyl ether) [PEVE], perfluoro(propyl vinyl ether) [PPVE], perfluoro(butyl vinyl ether) and so forth. Among them, PMVE, PEVE or PPVE is preferred.

In the above-mentioned layer (A), the FEP preferably comprises a TFE/HFP binary copolymer and/or a TFE/HFP/PFVE terpolymer.

The above-mentioned PFA and/or FEP is preferably one having not more than 40 unstable terminal groups per $10^6$ carbon atoms. When the number of such groups is larger than 40 per $10^6$ carbon atoms, foaming tends to occur on the occasion of melt molding. A more preferred upper limit is 20, and a still more preferred upper limit is 6. Further, the number of unstable terminal groups may be zero (measurement limit).

The above-mentioned number of unstable terminal groups is the value obtained by preparing a film with a thickness of 0.25 to 0.35 mm from the polymer by cold pressing and subjecting the film to spectral analysis within the wave number range of 400 to 4000 cm$^{-1}$ using a Fourier infrared absorption spectrometer [IR].

The above-mentioned unstable terminal groups are generally formed at a main chain terminus or termini by addition of the chain transfer agent or polymerization initiator used in the step of polymerization and are derived from the structure of the chain transfer agent or polymerization initiator.

The "unstable terminal groups" so referred to herein include $-CH_2OH$, $-CONH_2$, $-COF$, $-COOH$, $-COOCH_3$ or/and $-CF=CF_2$.

In the present invention, the layer (B) is a CTFE copolymer layer.

The CTFE copolymer-containing laminate of the invention, which comprises the above-mentioned layer (A) formed by using a PFA and/or FEP excellent in chemical resistance and thermal stability but high in liquid chemical permeability and, on the other hand, the layer (B) formed by using a CTFE copolymer excellent in liquid chemical impermeability and is produced by bonding the layer (A) and layer (B) to each other in the manner of lamination by coextrusion molding under flow path temperature conditions within a specific range described later herein, is excellent not only in chemical resistance, thermal stability and stress cracking resistance but also in liquid chemical impermeability.

The CTFE copolymer constituting the above-mentioned layer (B) may be a binary copolymer or a terpolymer or a further multicomponent copolymer.

As the binary copolymer, there may be mentioned, for example, CTFE/TFE copolymers, CTFE/PFVE copolymers, CTFE/VdF copolymers, CTFE/HFP copolymers, CTFE/Et copolymers, CTFE/$CH_2=CF(CF_2)_nH$ (n being an integer of 2 to 10) copolymers, CTFE/$CH_2=CH(CF_2)_nCF_3$ (n being an integer of 2 to 10) copolymers and the like. As the terpolymer and further multicomponent copolymers, there may be mentioned CTFE/TFE/HFP copolymers, CTFE/TFE/VdF copolymers, CTFE/TFE/PFVE copolymers, CTFE/TFE/HFP/PFVE copolymers, CTFE/TFE/VdF/PFVE copolymers, CTFE/TFE/$CH_2=CF(CF_2)_nH$ (n being an integer of 2 to 10) copolymers, CTFE/TFE/$CH_2=CH(CF_2)_nCF_3$ (n being an integer of 2 to 10) copolymers and the like.

Preferred as the CTFE copolymer constituting the layer (B) are CTFE/TFE/PFVE copolymers, CTFE/TFE/$CH_2=CF(CF_2)_nH$ (n being an integer of 2 to 10) copolymers and CTFE/TFE/$CH_2=CH(CF_2)_nCF_3$ (n being an integer of 2 to 10) copolymers, among others.

The above-mentioned CTFE copolymer may also be a copolymer of CTFE and Et and/or a fluorinated monomer, for example a CTFE/TFE/Et copolymer or CTFE/TFE/Et/PFVE copolymer.

The CTFE copolymer mentioned above is preferably one constituted of 2 to 98 mole percent of the chlorotrifluoroethylene unit [CTFE unit] and 98 to 2 mole percent of the monomer [M] unit derived from a monomer [M] copolymerizable with CTFE (hereinafter, such one is sometimes referred to as "CTFE copolymer (I)").

The "CTFE unit" so referred to herein is a chlorotrifluoroethylene-derived moiety [$-CFCl-CF_2-$] in the molecular structure of the CTFE copolymer and, likewise, the "monomer [M] unit" is a moiety resulting from addition of the monomer [M] in the molecular structure of the CTFE copolymer.

The above-mentioned monomer [M] is not particularly restricted but may be any monomer copolymerizable with CTFE and may comprise two or more species. As the monomer [M], there may be mentioned, among others, those other comonomers enumerated hereinabove referring to the PFA and/or FEP.

The CTFE copolymer mentioned above is more preferably a CTFE copolymer (hereinafter sometimes referred to as "CTFE copolymer (II)") constituted of the CTFE unit, the tetrafluoroethylene unit [TFE unit] and the monomer [N] unit derived from a monomer [N] copolymerizable with CTFE and TFE.

The "TFE unit" so referred to herein is a tetrafluoroethylene-derived moiety $[-CF_2-CF_2-]$ in the molecular structure of the CTFE copolymer (II) and, likewise, the "monomer [N] unit" is a moiety resulting from addition of the monomer [N] in the molecular structure of the CTFE copolymer.

The monomer [N] mentioned above is not particularly restricted but may be any one containing a fluorine atom or atoms within the molecule and copolymerizable with CTFE and TFE. As the monomer [N], there may be mentioned, among others, those enumerated hereinabove referring to the monomer [M], exclusive of TFE.

In the CTFE copolymer (II), the monomer [N] unit content is preferably 10 to 0.1 mole percent and the sum of the CTFE unit content and TFE unit content is preferably 90 to 99.9 mole percent. When the monomer [N] unit content is lower than 0.1 mole percent, the CTFE copolymer (II) is apt to be inferior in moldability, environmental stress cracking resistance and stress cracking resistance and, when the monomer [N] unit content is higher than 10 mole percent, the copolymer tend to become inferior in chemical liquid impermeability, thermal stability and mechanical characteristics. In the CTFE copolymer (II), the CTFE unit content is preferably 10 to 80 mole percent and the TFE unit content is preferably 20 to 90 mole percent.

When the monomer [N] is $CH_2=CF(CF_2)_nH$ (n being an integer of 2 to 10) or $CH_2=CH(CF_2)_nCF_3$ (n being an integer of 2 to 10), a more preferred lower limit to the monomer [N] content is 0.5 mole percent, and a more preferred upper limit thereto is 5 mole percent and a still more preferred upper limit is 3 mole percent.

In the practice of the invention, the proportions of the contents of such monomer units as the monomer [M] unit and monomer [N] unit are the values calculated based on the chlorine content percentage by mass as obtained by $^{19}$F-NMR analysis and elemental analysis.

The CTFE copolymer mentioned above is preferably one having a melting point [Tm] of 150°C to 280°C. A more preferred lower limit thereto is 160°C, a still more preferred lower limit is 170°C, and a more preferred upper limit is 260°C.

The melting point [Tm] mentioned above is the temperature corresponding to the melting peak as observed using a differential scanning calorimeter [DSC] at a programming rate of 10°C/minute.

The CTFE copolymer is preferably one containing not more than 40 such unstable terminal groups as mentioned above per $10^6$ carbon atoms. When that number is larger than 40, foaming tends to occur in the step of melt molding.

The polymers constituting the CTFE copolymer-containing laminate of the invention, namely the PFA, FEP and CTFE copolymer, among others, can be obtained by the conventional polymerization methods known in the art, for example by bulk polymerization, solution polymerization, emulsion polymerization and suspension polymerization.

The number of unstable terminal groups in the polymers constituting the CTFE copolymer-containing laminate of the invention can further be reduced in the conventional manner, for example by fluorination treatment.

Such terminal group stabilization as mentioned above can be realized, for example, by carrying out fluorination after polymerization, and such treatment is generally carried out at elevated temperatures. The temperature range in the fluorination step is, for example, within the range of from 100°C to 300°C, preferably within the range of 130°C to 250°C. The above fluorination is generally carried out by using either fluorine alone or a mixture of fluorine and an inert gas such as nitrogen and bringing this into contact with the polymer for the fluorination reaction.

In addition to the fluorination after polymerization, the terminal group stabilization can also be realized by using a polymerization initiator capable of providing a terminal $-CF_3$ group in the step of polymerization. As such polymerization initiator, there may be mentioned, for example, perfluoroalkyl peroxides such as $CF_3(CF_2)_n-O-O-(CF_2)_mCF_3$ and perfluoro acid peroxides such as $(CF_3-(CF_2)_n-COO)_2$.

The CTFE copolymer-containing laminate of the invention may further comprise a further layer (D) in addition to the above-mentioned layer (A) and layer (B).

The layer (D) is not particularly restricted but can be properly selected according to the intended use thereof. It may be the same layer as the above-mentioned other layer (C) (exclusive of the case where the layer (c) is the above-mentioned layer (B)).

When it comprises the above-mentioned layer (D) as well, the CTFE copolymer-containing laminate of the invention can be obtained by bonding the layer (A) and layer (B) together in the manner of lamination by coextrusion molding and bonding the layer (D) to the resulting laminate by the technique of lamination, or by extruding the layer (A) and layer (B) onto the layer (D) by the technique of coextrusion molding to be described later herein for lamination.

In transporting liquid chemicals for use in semiconductor plants and liquid crystal plants, typically hydrochloric acid, hydrofluoric acid and nitric acid, fluororesin tubes such as PFA resin tubes have so far been widely used. However, such tubes themselves are whitened and deteriorated due to liquid chemical permeation through the tubes, producing such problems as increased acid concentrations in the plant, corrosion of apparatus and environmental pollution. To improve such situation, tubes having a low chemical liquid permeability coefficient are desired.

In the case of hydrochloric acid, for instance, it is preferred that the CTFE copolymer-containing laminate of the invention has a 35% (by mass) hydrochloric acid permeability coefficient of not higher than $2.0 \times 10^{-13}$ (g·cm)/(cm$^2$·sec).

A more preferred upper limit to the above-mentioned 35% (by mass) hydrochloric acid permeability coefficient is $1.5 \times 10^{-13}$ (g·cm)/(cm$^2$·sec) and a still more preferred upper limit thereto is $0.7 \times 10^{-13}$ (g·cm)/(cm$^2$·sec).

Within the above range, a preferred lower limit to the 35% (by mass) hydrochloric acid permeability coefficient may be set at $0.001 \times 10^{-13}$ (g·cm)/(cm$^2$·sec), for instance.

When the 35% (by mass) hydrochloric acid permeability coefficient is within the above range, the CTFE copolymer-containing laminate of the invention, when used as fluid transfer members such as tubes, can reduce the hydrochloric acid permeability even when hydrochloric acid is contained in the fluid.

The 35% (by mass) hydrochloric acid permeability coefficient, so referred to herein, is an indicator showing the change in chloride ion concentration per unit time and unit area as resulting from permeation through the laminate and is the value measured in the same method of evaluation as described later herein.

Further, the CTFE copolymer to be used in the practice of the invention shows a low level of gas permeability. For example, it is possible to set the upper limit to the oxygen permeability coefficient at 25°C of the CTFE copolymer preferably at $2.0 \times 10^{-10}$ (cm$^3$·cm)/(cm$^2$·sec·cmHg), more preferably at $1.0 \times 10^{-10}$ (cm$^3$.cm)/(cm$^2$.sec.cmHg).

The CTFE copolymer-containing laminate of the invention, which has the layer (B) comprising the above CTFE copolymer, can also show good gas barrier properties.

The oxygen permeability coefficient, so referred to herein, is measured by the Mocon method in accordance with ASTM F 1249.

The CTFE copolymer-containing laminate of the invention preferably has a layer (A)-to-layer (B) bond strength of not lower than 10 N/cm.

When the bond strength is outside the above range, the liquid chemical, gas or water, for instance, which has permeated through the laminate accumulates at the interface between the layers, possibly causing blistering or cracking, for instance, in the interface portion, which in turn leads to failure for the laminate to manifest the good liquid chemical impermeability performance thereof.

A more preferred lower limit to the bond strength mentioned above is 20 N/cm and a still more preferred lower limit thereto is 40 N/cm.

The bond strength so referred to herein is the mean value determined in the following manner. Test pieces, 1 cm in width, are cut out of a tubular or film-like laminate and subjected to a 180-degree peel test at a rate of 25 mm/second using a Tensilon universal testing machine (product of Orientec Co.), and the mean value of 5 maxima on the elongation-tensile strength graph obtained is reported as the bond strength.

The CTFE copolymer-containing laminate of the invention can be produced by a method comprising lamination of the above-mentioned layer (A) and layer (B) by coextrusion molding. In accordance with the present invention, the coextrusion molding is carried out by properly selecting the material flow path temperatures prior to the layer (A)-forming material (a) and layer (B) -forming material (b) coming into contact with each other with the respective specific ranges given later herein.

In the art, it has been considered difficult to obtain laminates excellent in liquid chemical impermeability, gas barrier properties and appearance by coextrusion molding of a CTFE copolymer and a PFA and/or FEP. The reasons are as follows.

First, from the viewpoint of preventing thermal degradation, it has been considered preferable that the extrusion molding temperature in coextrusion molding of CTFE copolymers be not higher than 350°C. CTFE copolymers, upon thermal degradation, produces the problem of discoloration and, in addition, undergo reductions in molecular weight and sometimes show a tendency toward crack formation. Further, with the progress of degradation, microfoaming may occur, sometimes leading to failure in manifestation of the low permeability performance. Secondly, since, in coextrusion molding of a PFA and/or FEP, the melting points of the respective polymers are high, it has been regarded as preferable that the extrusion molding temperature be not lower than 350°C. When a PFA and/or FEP is extrusion-molded at below 350°C, melt fracture is caused and it is generally difficult for the moldings to maintain their appearance.

In accordance with the present invention, by selecting the flow path temperatures of the respective materials prior to the layer (A)-forming material (a) and layer (B)-forming material (b) coming into contact with each other within the respective specific ranges mentioned later herein, it becomes possible to prevent the layer (B), namely the CTFE copolymer layer, from thermal degradation and provide laminates excellent in appearance, liquid chemical impermeability, interfacial fusion and crack resistance.

The flow path temperatures can be adjusted, for example, by providing a thermal insulation layer between the two flow paths and providing each flow path with an independent heater.

The above-mentioned layer (A) and layer (B) in the CTFE copolymer-containing laminate of the invention are preferably those bonded together in the manner of lamination by coextrusion molding under conditions such that the temperature of the flow path (pa) through which the layer (A)-forming material (a) flows is 300 to 400°C and the temperature of the flow path (pb) through which the layer (B)-forming material (b) flows is 250 to 350°C prior to the material (a) and the material (b) coming into contact with each other in a multilayer die.

The material (a) and material (b) each is not particularly restricted but, for example, PFA pellets, FEP pellets, CTFE copolymer pellets or like appropriate pellets can be put into a molten state by feeding them to a coextrusion molding machine for melting and kneading. The material (a) and/or material (b), in particular the material (a), may contain, in addition to the respective polymer, an additive or additives such as carbon black each at an appropriate level.

Further, the coextrusion molding for lamination of the layer (A) and layer (B) is preferably carried out under conditions such that the die temperature at the site of contact between the material (a) and material (b) is 280 to 380°C. The site of contacting may also be said to be the site of contact between the material (a) extruded from the above-mentioned flow path (pa) and the material (b) extruded from the flow path (pb).

When the die temperature at that site of contact is below 280°C, the material (a) extruded from the flow path (pa) and the material (b) extruded from the flow path (pb) are rapidly cooled, so that the coextrusion may become difficult or the adhesion between the layer (A) and layer (B) may become insufficient in certain instances. When the die temperature at the above-mentioned site of contact is higher than 380°C, the thermal degradation of the CTFE copolymer may proceed in some instances.

In the above coextrusion molding, it is preferred, in addition to the selection of the die temperature at the site of contact within the above range, that the time of residence, at the site of contact, of the material (a) and material (b) be shortened so that the CTFE copolymer constituting the material (b) may be inhibited from thermal degradation. The above-mentioned residence time can be properly selected by shortening the die length at the site of contact and/or increasing the tube or sheet take-off speed on the extruding machine and preferably is within 2 minutes, more preferably within 1 minute, still more preferably within 30 seconds.

In the practice of the invention, the above-mentioned layer (A) and layer (B) each preferably has a thickness of 0.005 to 10 mm, more preferably 0.05 to 5 mm.

When the layer (A) and/or layer (B) comprises two or more layers, the range mentioned above refers to the total layer thickness.

The method of producing a CTFE copolymer-containing laminate according to the invention is a method of producing a CTFE copolymer-containing laminate for the production of a CTFE copolymer-containing laminate having a layer (A) comprising a PFA and/or a FEP and a layer (B) comprising a CTFE copolymer and comprises the steps of:

(1) introducing a layer (A)-forming material (a), after kneading in an extruder and transfer to a multilayer die, into a flow path (pa) maintained at a flow path temperature of 300 to 400°C, and

(2) introducing a layer (B)-forming material (b), after kneading in an extruder different from the above-mentioned extruder and transfer to the multilayer die, into a flow path (pb) maintained at a flow path temperature of 250 to 350°C. Through adjustments of the flow path temperatures for the flow path (pa) and flow path (pb) within the respective ranges specified above, the method of producing a CTFE copolymer-containing laminate according to the invention can provide laminates excellent in interfacial fusion bonding and liquid chemical impermeability and in appearance while inhibiting either of the polymers from thermal degradation in coextruding, in the manner of lamination, a CTFE copolymer generally having a low melting point and low thermal decomposition temperature and a PFA and/or FEP generally having a high melting point and a high thermal degradation temperature.

In the method of producing a CTFE copolymer-containing laminate according to the invention, the PFA, FEP and CTFE copolymer for constituting the layer (A) and layer (B), among others, the flow path (pa) and flow path (pb) and the preferred ranges of various conditions are the same as those described hereinabove referring to the CTFE copolymer-containing laminate of the invention.

The method of producing a CTFE copolymer-containing laminate according to the invention may be one further comprising, following the above-mentioned step (1) and step (2), step (3') of extruding the material (a) and material (b) from the flow path (pa) and flow path (pb), respectively, by coextrusion molding to form a laminate comprising the above-mentioned layer portion (A) and the above-mentioned layer (B).

The method of producing a CTFE copolymer-containing laminate according to the invention preferably comprises, following the above-mentioned step (1) and step (2), also step (3) of extruding the material (a) and material (b) by coextrusion molding to form a laminate comprising the above-mentioned layer (A) and layer (B) while maintaining the die temperature at the site of contact between the flow path (pa) and flow path (pb) at a temperature of 280 to 380°C.

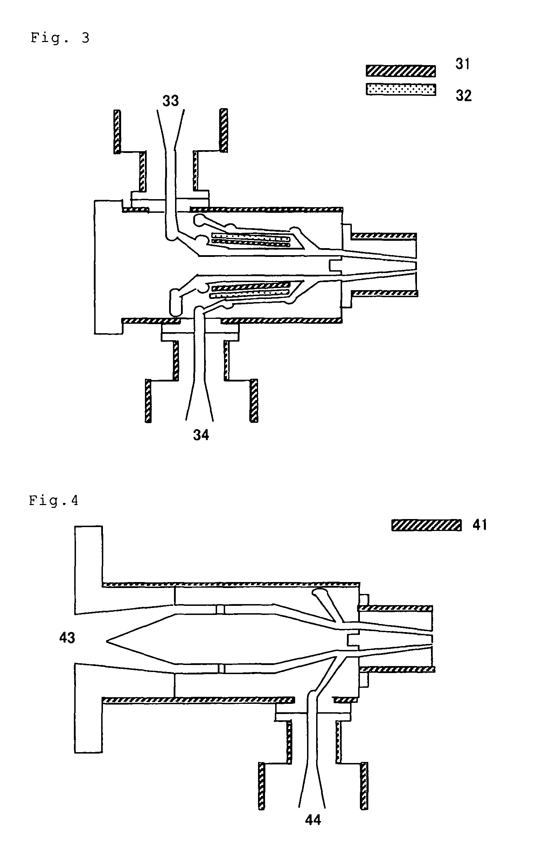

In the method of producing a CTFE copolymer-containing laminate according to the invention, the die to be used is preferably one comprising a thermally insulating section intervening between the flow path (pa) and flow path (pb) as well as a heater for heating the flow path (pa) and an internal heater for heating the flow path (pb), as shown in Fig. 3, for instance.

The thermally insulating section preferably consists of an air layer.

It is also preferred that an outer layer side die be separately provided at a site of the flow path (pa) near the outlet of the inner layer side die, as shown in Fig. 4, so that the flow path (pa) may join the outer layer side flow path (pb) toward the tip of the inner layer side die. In the case shown in Fig. 4, it is possible to provide the outer layer side die and inner layer side die with respective heaters.

While Fig. 3 and Fig. 4 show examples of tube dies for two-layer molding, it is possible to cope with the case of three-layer or further multilayer molding by increasing the number of flow paths.

The CTFE copolymer-containing laminate of the invention may be a laminate whose "layer (A) and layer (B)" are formed by coextrusion molding of one or more layers (A) and one or more layers (B), as mentioned above and, in cases where three or more layers are to be formed by coextrusion for lamination, the coextrusion molding may be carried out while maintaining the flow path(s) corresponding to the flow path (pa), namely the flow path (s) through which the layer (A) -constituting material (a) flows, under the flow path temperature conditions specified above for the flow path (pa) and the flow path (s) corresponding to the flow path (pb), namely the flow path(s) through which the layer (B)-constituting material (b) flows, under the flow path temperature conditions specified above for the flow path (pb). For example, when the above-mentioned "layer (A) and layer (B)" comprise one layer (A), one layer (B) and one layer (A) laminated in that order, a total of three flow paths, namely flow path (a), flow path (b) and flow path (a), are generally arranged in that order in a multilayer die and, in this case, it is preferred that two such insulation layers as mentioned above be provided between each two of the three flow paths and three heaters be provided for heating the three flow paths, respectively.

The CTFE copolymer-containing laminate of the invention and the CTFE copolymer-containing laminate obtained by the method of producing a CTFE copolymer-containing laminate according to the invention (hereinafter these CTFE copolymer-containing laminates are collectively referred to as "CTFE copolymer-containing laminate in the present invention" for short) can be formed into various shapes such as tubes, pipes, hoses, films, sheets and bottles but preferably have the shape of tubes, pipes, sheets or films.

It is not always necessary that the CTFE copolymer-containing laminate in the present invention comprise the above-mentioned layer (A) and layer (B). For example, it may have a three-layer structure comprising the layer (B) as a middle layer and two such layer portions (A) as mentioned above constituting both outside layers, or a three-layer structure comprising the layer (A) as a middle layer and two outside layers each of which is the layer (B), or a three-layer or further multilayer structure having at least the above-mentioned layer (A), layer (B) and layer (D).

When it is a tube, hose or pipe, the CTFE copolymer-containing laminate in the present invention may have the layer (B) as the outer layer or inner layer but it is particularly preferred that the layer (A) be the innermost layer. When the layer (A) is the innermost layer, the material (a) of the layer (A) preferably comprises FEP.

When it has a three-layer or further multilayer structure having the layer (D) mentioned above, the CTFE copolymer-containing laminate in the present invention is preferably one comprising the layer (A) as the innermost layer, the layer (B) as a middle layer and the layer (D) as the outermost layer; it is more preferred that the innermost layer be electrically conductive. The conductive innermost layer is preferably one resulting from addition of such a conductive material as carbon black.

The CTFE copolymer-containing laminate in the present invention can be used in various fields of application, preferably as a liquid transporting member, in particular. As the fields of application, there may be mentioned, for example, piping tubes for feeding liquid chemicals in semiconductor plants and chemical plants, lining sheets or lining tubes for lined piping materials; lining sheets for liquid chemical tanks or reservoirs; liquid chemical piping tubes for semiconductor cleaning apparatus and coater developer apparatus; containers and packaging materials for liquid chemicals, drugs, foods and the like; solar cell films; films for agricultural use; piping tubes for auto fuels; tubes for water sterilization; moistureproof films for electronic devices and other moistureproof films or tubes; liquid level meters for use in liquid chemical tanks or reservoirs; films for fireproof safety glasses; and so forth.

When the CTFE copolymer-containing laminate in the present invention is used as a fluid transporting member, the fluid includes, among others, liquid chemicals in semiconductor plants and chemical plants; liquid chemicals in semiconductor cleaning apparatus and coater developer apparatus; and the like.

As the liquid chemicals, there may be mentioned, for example, hydrochloric acid, hydrofluoric acid, nitric acid, sulfuric acid, phosphoric acid, fuming nitric acid, aqueous hydrogen peroxide, aqua regia, aqueous ammonia, hydrofluoric/nitric mixed acid, nitric/acetic/phosphoric acid mixture, amines and developing solutions.

The CTFE copolymer in the present invention is excellent in liquid chemical impermeability and, in addition, excellent in gas barrier properties against steam, nitrogen, ammonia, oxygen, hydrogen and so forth and, therefore, the CTFE copolymer-containing laminate in the present invention, in the form of tubes or films, for instance, can also prevent gases from invading from the outside and can transport fluids without adulteration thereof with various gases; hence, the quality of the contents can be secured.

EFFECTS OF THE INVENTION

The CTFE copolymer-containing laminate of the invention, which has the constitution described hereinabove, has a good appearance, liquid chemical impermeability, interfacial fusion and crack resistance performance.
The method of producing a CTFE copolymer-containing laminate according to the invention can produce a laminate having a good appearance, liquid chemical impermeability, interfacial adhesion and crack resistance performance while inhibiting the thermal degradation of the CTFE copolymer layer in molding a laminate having a PFA layer or FEP layer and the CTFE copolymer layer.

BEST MODES FOR CARRYING OUT THE INVENTION

The following examples and comparative examples illustrate the present invention more specifically. These examples and comparative examples are, however, by no means limitative of the scope of the invention.

Synthesis Example 1

A jacketed and stirrer-equipped polymerization vessel capable of receiving 1320 kg of water was charged with 392 kg of demineralized pure water, the inside space atmosphere was fully substituted with pure nitrogen gas and then the nitrogen gas was eliminated under vacuum. Then, 307 kg of octafluorocyclobutane, 5.8 kg of chlorotrifluoroethylene [CTFE], 49.6 kg of tetrafluoroethylene [TFE] and 27.7 kg of perfluoro(propyl vinyl ether) [PPVE] were fed, under pressure, to the vessel, the temperature was adjusted to 35°C, and the stirring was started. Thereto was added 0.8 kg of a 50% (by mass) solution of di-n-propyl peroxydicarbonate [NPP] in methanol to initiate the polymerization. During polymerization, a monomer mixture adjusted to the same composition as that of the desired copolymer (CTFE:TFE:PPVE (mole percent) = 25:73:2) was additionally fed to maintain the vessel inside pressure at 0.80 MPa. The polymerization was continued until the total additional charge amounted to 70% by mass of the solvent. Thereafter, the residual gas in the vessel was discharged, and the polymer formed was taken out, washed with demineralized pure water and dried to give 209 kg of a CTFE copolymer in granular powder form. Using a short-screw extruder (Ø 50 mm), the polymer was then melt-kneaded at a cylinder temperature of 320°C to give CTFE copolymer pellets. Synthesis Example 2
A jacketed and stirrer-equipped polymerization vessel capable of receiving 1320 kg of water was charged with 392 kg of demineralized pure water, the inside space atmosphere was fully substituted with pure nitrogen gas and then the nitrogen gas was eliminated under vacuum. Then, 307 kg of octafluorocyclobutane, 8.3 kg of chlorotrifluoroethylene [CTFE], 49.6 kg of tetrafluoroethylene [TFE] and 29.0 kg of perfluoro(propyl vinyl ether) [PPVE] were fed, under pressure, to the vessel, the temperature was adjusted to 35°C, and the stirring was started. Thereto was added 0.8 kg of a 50% (by mass) solution of di-n-propyl peroxydicarbonate [NPP] in methanol to initiate the polymerization. During polymerization, a monomer mixture adjusted to the same composition as that of the desired copolymer (CTFE:TFE:PPVE (mole percent) = 28:70:2) was additionally fed to maintain the vessel inside pressure at 0.80 MPa. The polymerization was continued until the total additional charge amounted to 70% by mass of the solvent. Thereafter, the residual gas in the vessel was discharged, and the polymer formed was taken out, washed with demineralized pure water and dried to give 209 kg of a CTFE copolymer in granular powder form. Using a short-screw extruder (Ø 50 mm), the polymer was then melt-kneaded at a cylinder temperature of 320°C to give CTFE copolymer pellets.

Synthesis Example 3

A jacketed and stirrer-equipped polymerization vessel capable of receiving 1320 kg of water was charged with 392 kg of demineralized pure water, the inside space atmosphere was fully substituted with pure nitrogen gas and then the nitrogen gas was eliminated under vacuum. Then, 307 kg of octafluorocyclobutane, 18 kg of chlorotrifluoroethylene [CTFE], 35 kg of tetrafluoroethylene [TFE] and 22 kg of perfluoro (propyl vinyl ether) [PPVE] were fed, under pressure, to the vessel, the temperature was adjusted to 35°C, and the stirring was started. Thereto was added 3.2 kg of a 50% (by mass) solution of di-n-propyl peroxydicarbonate [NPP] in methanol to initiate the polymerization. During polymerization, a monomer mixture adjusted to the same composition as that of the desired copolymer (CTFE:TFE:PPVE (mole percent) = 37:61:2) was additionally fed to maintain the vessel inside pressure at 0.69 MPa. The polymerization was continued until the total additional charge amounted to 70% by mass of the solvent. Thereafter, the residual gas in the vessel was discharged, and the polymer formed was taken out, washed with demineralized pure water and dried to give 209 kg of a CTFE copolymer in granular powder form. Using a short-screw extruder (Ø 50 mm), the polymer was then melt-kneaded at a cylinder temperature of 280°C to give CTFE copolymer pellets.
The CTFE copolymer pellets obtained in each synthesis example were evaluated for the following physical characteristics.

1. CTFE, TFE and PPVE contents

The values were calculated based on the $^{19}$F-NMR analysis data and the chlorine content (% by mass) obtained by elemental analysis.

2. Melting point

Using a differential scanning calorimeter [DSC] (trade name: RDC220, product of Seiko Denshi), 3 mg of each sample was heated from room temperature at a programming rate of 10°C/minute, and the melting peak temperature is reported as the melting point.

3. MFR

The MFR is determined in accordance with ASTM D 3307-01 using a melt indexer (product of Toyo Seiki) as the mass (g/10 minutes) of the polymer flowing out, per 10 minutes, through a nozzle with an inside diameter of 2 mm and a length of 8 mm at a temperature of 330°C under a load of 5 kg.

4. Thermal degradation starting temperature

Using a differential thermal analysis-thermogravimetry apparatus (trade name: TG/DTA6200, product of Seiko Denshi), 10 mg of each sample was heated from room temperature at a programming rate of 10°C/minute, and the temperature at which the loss in sample quantity amounts to 1% by mass is regarded as the degradation starting temperature.
The results are shown in Table 1.
[Table 1]

| | Chlorotrifluoroethylene copolymer composition (mol %) | | | Physical characteristics of polymer | | |
|---|---|---|---|---|---|---|
| | CTFE | TFE | PPVE | Melting point (°C) | MFR (g/10min) | Thermal degradation starting temperature (°C) |
| Synthesis Example 1 | 25 | 73 | 2 | 246 | 6.0 | 430 |
| Synthesis Example 2 | 28 | 70 | 2 | 242 | 7.0 | 425 |
| Synthesis Example 3 | 37 | 61 | 2 | 230 | 8.5 | 402 |

Example 1

Used as a multilayer die for molding two-resin two-layer tubes was a die having an air layer serving as a thermal insulation layer between the respective flow paths prior to contacting of two layers and having heaters for heating the respective layer flow paths, as shown in Fig. 3. A two-layer laminated tube consisting of a PFA layer and a CTFE copolymer layer was produced using the CTFE copolymer pellets obtained in Synthesis Example 1 for forming the outer layer and a PFA resin (Neoflon PFA AP-231SH (MFR = 2.0 g/10 minutes, measured at 372°C), product of Daikin Industries) for forming the inner layer under the multilayer extrusion molding conditions described in Table 3.

Example 2

A laminated tube was produced in the same manner as in Example 1 except that the PFA resin to be used for the inner layer was subjected in advance to terminal fluorination treatment comprising 15 hours of heating at 200°C in the presence of and in contact with a gas mixture prepared by dilution of fluorine gas with nitrogen to 30% by volume to reduce the number of unstable terminal groups to zero per $10^6$ carbon atoms (MFR after treatment = 2.0 g/10 minutes, measured at 372°C). The multilayer die for two-resin two-layer tube molding as used was the one shown in Fig. 4.

In this example, the number of unstable terminal groups was determined in the following manner. The polymer was cold-pressed to give a film with a thickness of 0.25 to 0.35 mm, the film was subjected to spectral analysis within the wave number range of 400 to 4000 cm$^{-1}$ using a Fourier transform infrared absorption spectrometer [IR] (product of Perkin Elmer), and a difference spectrum was obtained in contrast with a standard sample fully fluorinated until there was observed no more substantial difference among spectra. The absorbance at each wave number assignable to each unstable terminal group species was read and the number per $10^6$ carbon atoms was calculated according to the formula:

$$\text{Number of unstable terminal groups per } 10^6 \text{ carbon atoms} = I \times K/t$$

(In the above formula, I is the absorbance, K is the correction factor shown below in Table 2, and t is the thickness (in mm) of the film subjected to measurement.)

The correction factors K are shown in Table 2.

[Table 2]

| Unstable terminal group | Wave number (cm$^{-1}$) | Correction factor |
|---|---|---|
| -COF | 1880 | 405 |
| -COOH | 1815 1779 | 455 |
| -COOCH$_3$ | 1789 | 355 |
| -CONH$_2$ | 3436 | 480 |
| -CH$_2$OH | 3648 | 2325 |

Example 3

A laminated tube was produced using the same die as used in Example 2 except that the CTFE copolymer pellets obtained in Synthesis Example 2 were used for forming the outer layer and a FEP resin (Neoflon FEP NP30 (MFR = 3.0 g/10 minutes, measured at 372°C), product of Daikin Industries) was used for forming the inner layer and that the multilayer extrusion molding conditions were as shown in Table 3.

Example 4

A laminated tube was produced in the same manner as in Example 1 except that the CTFE copolymer pellets obtained in Synthesis Example 3 were used for forming the outer layer and a FEP resin (Neoflon FEP NP3000 (MFR = 30.0 g/10 minutes, measured at 372°C), product of Daikin Industries) was used for forming the inner layer and that the multilayer extrusion molding conditions were as shown in Table 3.

Example 5

Used as a multilayer die for molding two-resin three-layer films was a die having two air layers, each serving as an insulation layer, disposed among the three flow paths before three layers coming into contact with one another and having heaters for heating the respective layer flow paths. A three-layer laminated film consisting of two PFA layers and a CTFE copolymer layer was produced using the CTFE copolymer pellets obtained in Synthesis Example 1 for forming the intermediate layer and a PFA resin (Neoflon PFA AP-221SH (MFR = 8.0 g/10 minutes, measured at 372°C), product of Daikin Industries) for forming both outer layers under the multilayer extrusion molding conditions shown in Table 3.

Example 6

A two-layer laminated film consisting of a FEP layer and a CTFE copolymer layer was produced using, as a multilayer die for two-resin two-layer films, a die having an air layer serving as an insulation layer between the respective flow paths prior to the two layers coming into contact with each other, with two heaters disposed for heating the respective layer flow paths and using the CTFE copolymer pellets obtained in Synthesis Example 2 and a FEP resin (Neoflon FEP NP21 (MFR = 7.0 g/10 minutes, measured at 372°C), product of Daikin Industries) under the multilayer extrusion molding conditions shown in Table 3.

Comparative Example 1

A two-layer laminated tube consisting of a PFA layer and a CTFE copolymer layer was produced using, as a multilayer die for two-resin two-layer tubes, a die having no insulation layer between the respective flow paths prior to the two layers coming into contact with each other and having no inside heater, with a heater disposed only outside the die, but otherwise similar in structure to the die shown in Fig. 3, and using the CTFE copolymer pellets obtained in Synthesis Example 1 for forming the outer layer and a PFA resin (Neoflon PFA AP-231SH, product of Daikin Industries) for forming the inner layer under the multilayer extrusion molding conditions shown in Table 3.

Comparative Example 2

A laminated tube was produced in the same manner as in Comparative Example 1 except that the CTFE copolymer obtained in Synthesis Example 2 was used for forming the outer layer and a FEP resin (Neoflon FEP NP30, product of Daikin Industries) for forming the inner layer and the multilayer extrusion molding conditions were as shown in Table 3.

Comparative Example 3 and Comparative Example 4

Using the same outer layer material and inner layer material as used in Comparative Example 1, laminated tubes were produced in the same manner as in Comparative Example 1 except that the multilayer extrusion molding conditions were as shown in Table 3.
EP 1 859 934 A1

[Table 3]

| | Extruder cylinder temperatures | | | Flow path temperatures within die before contacting | | | Die temperature at site of contacting | Tube or film take-off speed | Layer thicknesses [inner layer* / (intemiediate layer) /outer layer*] |
|---|---|---|---|---|---|---|---|---|---|
| | Inner layer* material / layer temperature (°C) | Intermediate material / temperature (°C) | Outer layer* material / temperature (°C) | Inner layer* flow path temperature (°C) | Intermediate layer flow path temperature (°C) | Outer layer* flow path temperature (°C) | (°C) | m/min | mm/(mm)/mm |
| Example 1 | PFA/390 | - | Synthesis Example 1 / 330 | 360 | - | 330 | 365 | 0.6 | 1.1/0.5 |
| Example 2 | PFA/390 | - | Synthesis Example 1 / 330 | 360 | - | 330 | 365 | 0.6 | 1.1 /0.5 |
| Example 3 | FEP/380 | - | Synthesis Example 2 / 320 | 360 | - | 320 | 360 | 0.8 | 1.1/0.5 |
| Example 4 | FEP/340 | - | Synthesis Example 3/280 | 320 | - | 270 | 320 | 1.0 | 1.1/0.5 |
| Example 5 | PFA/380 | Synthesis Example 1 /330 | PFA/380 | 360 | 330 | 360 | 360 | 0.7 | 0.18/0.15/0.17 |
| Example 6 | FEP/370 | - | Synthesis Example 2 / 320 | 360 | - | 320 | 350 | 0.5 | 0.35/0.15 |

| | Extruder cylinder temperatures | | | Flow path temperatures within die before contacting | | | Die temperature at site of contacting | Tube or film take-off speed | Layer thicknesses [inner layer* / (intemiediate layer) /outer layer*] |
|---|---|---|---|---|---|---|---|---|---|
| | Inner layer* material / layer temperature (°C) | Intermediate material / temperature (°C) | Outer layer* material / temperature (°C) | Inner layer* flow path temperature (°C) | Intermediate layer flow path temperature (°C) | Outer layer* flow path temperature (°C) | (°C) | m/min | mm/(mm)/mm |
| Comprative Example 1 | PFA/390 | - | Synthesis Example 1/330 | 370 | - | | 390 | 0.6 | Outer layer foamed, hence lamination could not be realized. |
| Comprative Example 2 Example 2 | FEP/380 | - | Synthesis Example 2/320 Example 2 / 320 | 370 | - | 360 | 390 | 0.8 | Outer layer foamed, hence lamination could not be realized. |
| Comprative Example 3 | PFA/390 | - | Synthesis Example 1 / 330 | 390 | - | 370 | 370 | 0.6 | Outer layer foamed. hence lamination could not be realized. |
| Comprative Example 4 | PFA/390 | - | Synthesis Example 1 /330 | 390 | - | 330 | 400 | 0.6 | Outer layer foamed. hence lamination could not be realized. |
| * For films in Examples 5 and 6, there is no inner/outer distinction; thus, one layer and the other layer are meant. | | | | | | | | | |

Evaluations of laminates (laminated tubes or films)

The laminated tubes or films obtained in the examples and comparative examples were evaluated by the following methods. 1. Permeability coefficient for 35% (by mass) hydrochloric acid

(1) Measurements of laminated films

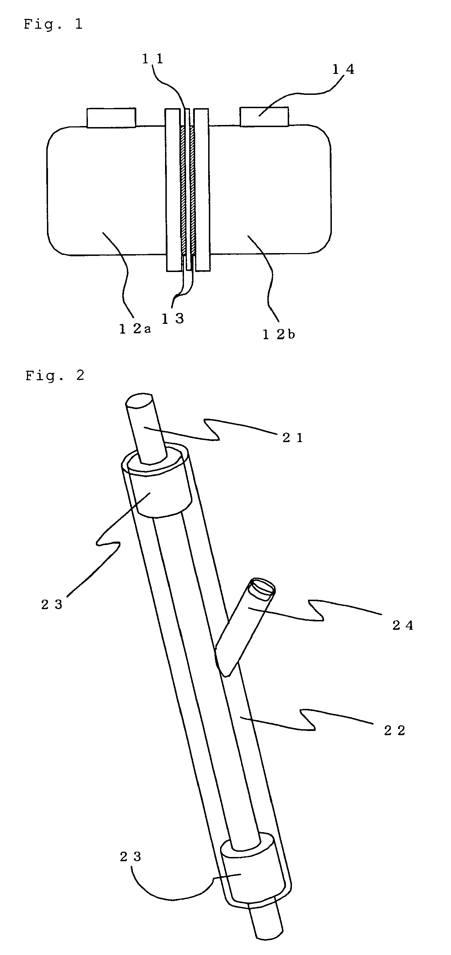

Each sample sheet 11 was put centrally between two glass containers 12a and 12b (each having a capacity of 200 ml) shown in Fig. 1 using fluororubber-made O rings 13. The container 12a on one side of the sample 11 sheet was filled with 200 ml of 35% (by mass) hydrochloric acid and the other container 12b with 200 ml of pure water, and the whole assembly was allowed to stand in a constant-temperature bath maintained at 25°C (on that occasion, the liquid-contacting area of the sample sheet 11 was 70 mm Ø). After standing in this condition, about 1 ml was sampled from the pure water side container 12b through a sampling port 14 and the chloride ion concentration Y (ppm) in the pure water was determined using an ion chromatograph (trade name: IC7000-E, product of Yokogawa Electric) and the permeability coefficient was calculated using the formula given below.

(2) Measurements of laminated tubes

A 30-cm-long portion 21 was cut off from each tube, as shown in Fig. 2. One end thereof was sealed by heating, 52 ml of 35% (by mass) hydrochloric acid was placed in the tube 21 and the other end was also sealed. The hydrochloric acid-containing tube 21 was inserted into a glass tube 22 and immobilized using fluororubber-made packing members 23. Pure water (110 ml) was poured into the glass tube through a sampling port 24 and the whole was placed in a constant-temperature bath maintained at 25°C. On that occasion, the tube section between the packing members 23 was in contact with pure water and the length of that section was 18.5 cm. After standing in that condition, about 1 ml was sampled through the sampling port 24 and the chloride ion concentration in the pure water was determined using an ion chromatograph in the same manner as in the case of permeability testing of sheets. The permeability coefficient was calculated using the formula give below.
```
Formula:  X = (β x film or wall thickness)/cross section
```

β: Gradient of the line resulting from plotting α against T during the period (Tβ) where α varies linearly against T.
α: Total amount that has permeated (in g) = Y x W x $10^{-6}$ (in g/second)
W: Amount of pure water (in ml)
T: Time (in seconds) elapsed from the start of permeation (point of time of pouring hydrochloric acid into the container or tube) to sampling
Film or wall thickness: The sheet thickness or tube wall thickness (in cm; measured using a micrometer)
Cross section: Area of the sample sheet or tube in contact with pure water in the permeability testing apparatus (in $cm^2$)

2. Interfacial fusion (adhesion or bond strength) of the CTFE copolymer layer

Test pieces, 1 cm in width, were cut out from each tubular or film-shaped laminate and subjected to 180-degree peel testing using a Tensilon universal testing machine (product of Orientec) at a rate of 25 mm/minute. The bond strength was determined as the mean of 5 maxima on elongation-tensile strength graphs.

3. Appearance

The appearance was evaluated by visual inspection.
The evaluation results are shown in Table 4.
[Table 4]

| | Permeability coefficient of laminate for 35% (by mass) hydrochloric acid | Fusion with CTFE copolymer layer | Appearance of laminate |
|---|---|---|---|
| | x 10$^{-13}$ (g·cm)/(cm$^2$·sec) | N/cm | |
| Example 1 | 0.7 | 61 | No foaming, no discoloration |
| Example 2 | 0.7 | 59 | No foaming, no discoloration |
| Example 3 | 0.6 | 56 | No foaming, no discoloration |
| Example 4 | 0.4 | 25 | No foaming, no discoloration |
| Example 5 | 0.8 | 51 | No foaming, no discoloration |
| Example 6 | 0.7 | 53 | No foaming, no discoloration |
| Comparative Example 1 | - | Outer layer foamed, hence lamination could not be realized. | Foaming and yellowing |
| Comparative Example 2 | - | Outer layer foamed, hence lamination could not be realized. | Foaming and yellowing |
| Comparative Example 3 | - | Outer layer foamed, hence lamination could not be realized. | Foaming and yellowing |
| Comparative Example 4 | - | Outer layer foamed, hence lamination could not be realized. | Foaming and yellowing |

In each of the Comparative Examples in which the coextrusion was carried out at flow path temperatures within the die before adhesion outside the range of the invention, the outer layer could not form any laminate. On the contrary, all the moldings obtained in the Examples were excellent with respect to 35% (by mass) hydrochloric acid permeability coefficient and bond strength and were resistant to peeling at 20 N/cm. The laminates of Examples 1, 2 and 5 in which the inner layer was formed using a PFA were particularly excellent in bond strength while the laminates of Examples 3, 4 and 6 in which FEP was as the inner side showed a tendency toward lower permeability coefficients for 35% (by mass) hydrochloric acid.

INDUSTRIAL APPLICABILITY

The CTFE copolymer-containing laminate of the invention, which has the constitution described hereinabove, has a good appearance, liquid chemical impermeability, interfacial fusion and crack resistance performance.
The method of producing a CTFE copolymer-containing laminate according to the invention can produce a laminate having a good appearance, liquid chemical impermeability, interfacial adhesion and crack resistance performance while inhibiting the thermal degradation of the CTFE copolymer layer in molding a laminate having a PFA layer or FEP layer and the CTFE copolymer layer.

BRIEF DESCRIPTION OF THE DRAWINGS

    [Fig. 1] This is a schematic representation of an experimental device used in 35% (by mass) hydrochloric acid permeability testing of the laminated film.

[Fig. 2] This is a schematic representation of an experimental device used in 35% (by mass) hydrochloric permeability testing of the laminated tube.

[Fig. 3] This is a schematic representation of an example of the multilayer die for producing a two-resin two-layer tube in the practice of the invention.

[Fig. 4] This is a schematic representation of another example of the multilayer die for producing a two-resin two-layer tube in the practice of the invention.

EXPLANATION OF SYMBOLS

11 - Sample sheet
12a - Glass container (containing 35% (by mass) hydrochloric acid)
12b - Glass container (containing pure water)
13 - O ring
14 - Sampling port
21 - Tube
22 - Glass tube
23 - Packing
24 - Sampling port
31, 41 - Heater section
32 - Air layer
33, 43 - Inner layer side
34, 44 - Outer layer side

**Claims**

1. A chlorotrifluoroethylene copolymer-containing laminate having a layer (A) comprising a tetrafluoroethylene/perfluoro (vinyl ether) copolymer and/or a tetrafluoroethylene/hexafluoropropylene copolymer and a layer (B) comprising a chlorotrifluoroethylene copolymer,
   said layer (A) and said layer (B) being formed by coextrusion molding under a condition such that the temperature of a flow path (pa) through which a layer (A)-forming material (a) flows is 300 to 400°C and the temperature of a flow path (pb) through which a layer (B)-forming material (b) flows is 250 to 350°C prior to said material (a) and said material (b) coming into contact with each other in a multilayer die.

2. The chlorotrifluoroethylene copolymer-containing laminate according to claim 1,
   which is formed by coextrusion molding under a condition such that the die temperature at the site of contact between the material (a) and material (b) in the multilayer die is 280 to 380°C.

3. The chlorotrifluoroethylene copolymer-containing laminate according to claim 1 or 2,
   wherein the tetrafluoroethylene/hexafluoropropylene copolymer comprises a tetrafluoroethylene/hexafluoropropylene binary copolymer and/or a tetrafluoroethylene/hexafluoropropylene/perfluoro(vinyl ether) terpolymer.

4. The chlorotrifluoroethylene copolymer-containing laminate according to claim 1, 2 or 3,
   wherein the chlorotrifluoroethylene copolymer contains not more than 40 unstable terminal groups per $10^6$ carbon atoms.

5. The chlorotrifluoroethylene copolymer-containing laminate according to claim 1, 2, 3 or 4,
   wherein the tetrafluoroethylene/perfluoro(vinyl ether) copolymer and/or the tetrafluoroethylene/hexafluoropropylene copolymer contains not more than 40 unstable terminal groups per $10^6$ carbon atoms.

6. The chlorotrifluoroethylene copolymer-containing laminate according to claim 1, 2, 3, 4 or 5,
   which is a tube, pipe, sheet or film.

7. The chlorotrifluoroethylene copolymer-containing laminate according to claim 6,
   wherein the layer (A) is the innermost layer.

**8.** The chlorotrifluoroethylene copolymer-containing laminate according to claim 1, 2, 3, 4, 5, 6 or 7, which is a liquid transporting member.

**9.** A method of producing a chlorotrifluoroethylene copolymer-containing laminate having a layer (A) comprising a tetrafluoroethylene/perfluoro(vinyl ether) copolymer and/or a tetrafluoroethylene/hexafluoropropylene copolymer and a layer (B) comprising a chlorotrifluoroethylene copolymer comprising the steps of:

(1) introducing a layer (A)-forming material (a), after kneading in an extruder and transfer to a multilayer die, into a flow path (pa) maintained at a flow path temperature of 300 to 400°C, and
(2) introducing a layer (B)-forming material (b), after kneading in an extruder different from said extruder and transfer to said multilayer die, into a flow path (pb) maintained at a flow path temperature of 250 to 350°C.

**10.** The method of producing a chlorotrifluoroethylene copolymer-containing laminate according to claim 9, which further comprises, following step (1) and step (2), step (3) of extruding the material (a) and the material (b) by coextrusion molding to form the laminate having the layer (A) and the layer (B) while maintaining the die temperature at the site of contact between the flow path (pa) and the flow path (pb) at a temperature of 280 to 380°C.

**11.** The method of producing a chlorotrifluoroethylene copolymer-containing laminate according to claim 9 or 10, wherein the multilayer die has a thermally insulating section intervening between the flow path (pa) and the flow path (pb) as well as a heater for heating the flow path (pa) and a heater for heating the flow path (pb).

**12.** The method of producing a chlorotrifluoroethylene copolymer-containing laminate according to claim 11, wherein the thermally insulating section is an air layer.

Fig. 1

Fig. 2

Fig. 3

31
32

33

34

Fig.4

41

43

44

## INTERNATIONAL SEARCH REPORT

| | International application No. |
| --- | --- |
| | PCT/JP2006/304759 |

| A. CLASSIFICATION OF SUBJECT MATTER |
| --- |
| *B32B27/30* (2006.01), *B29C47/06* (2006.01), *B32B1/08* (2006.01), *C08F214/18* (2006.01) |

According to International Patent Classification (IPC) or to both national classification and IPC

| B. FIELDS SEARCHED |
| --- |
| Minimum documentation searched (classification system followed by classification symbols) |
| B29C47/00-47/96, B29D9/00, B32B1/00-43/00, C08J5/00-5/02, C08J5/12-5/22 |

| Documentation searched other than minimum documentation to the extent that such documents are included in the fields searched |
| --- |
| Jitsuyo Shinan Koho      1922-1996    Jitsuyo Shinan Toroku Koho    1996-2006 |
| Kokai Jitsuyo Shinan Koho   1971-2006    Toroku Jitsuyo Shinan Koho    1994-2006 |

| Electronic data base consulted during the international search (name of data base and, where practicable, search terms used) |
| --- |
| |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | JP 9-137900 A  (Nichias Corp.),<br>27 May, 1997 (27.05.97),<br>Claim 1; Par. Nos. [0010] to [0013]<br>(Family: none) | 1-3,6-8,<br>1-12 |
| X<br>Y | JP 2005-528244 A  (3M Innovative Properties<br>Co.),<br>22 September, 2005 (22.09.05),<br>Claims 1, 7, 11, 19, 20, 22; Par. Nos. [0001],<br>[0012], [0030], [0031], [0034]<br>& US 2003/198771 A1     & EP 1497112 A1<br>& WO 2003/089232 A1 | 1-3,6-8<br>1-12 |

| ☒   Further documents are listed in the continuation of Box C. | ☐   See patent family annex. |
| --- | --- |

| *    Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>    05 June, 2006 (05.06.06) | Date of mailing of the international search report<br>    13 June, 2006 (13.06.06) |
| --- | --- |
| Name and mailing address of the ISA/<br>   Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/304759

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-74692 A (The Japan Steel Works, Ltd.), 11 March, 2004 (11.03.04), Claims 1, 2; Par. Nos. [0001], [0006], [0008] to [0010]; Figs. 1 to 4 (Family: none) | 1-12 |
| Y | JP 2001-517158 A (A Von Rubber & Plastics, Inc.), 02 October, 2001 (02.10.01), Claims; page 7, line 20 to page 8, line 3; page 9, lines 2 to 11; Figs. 1 to 3 & US 1997/5641445 A1 & EP 0980306 A1 & WO 1998/046412 A1 | 1-12 |
| Y | JP 63-222833 A (Sumitomo Bakelite Co., Ltd.), 16 September, 1988 (16.09.88), Claims; page 2, upper left column, lines 10 to 20; lower left column, lines 7 to 13 (Family: none) | 1-12 |
| Y | WO 2001/070485 A1 (Daikin Industries, Ltd.), 27 September, 2001 (27.09.01), Page 24, lines 9 to 12 & US 2004/060642 A1 & EP 1283101 A1 | 1-12 |
| Y | JP 10-274898 A (NTN Corp.), 13 October, 1988 (13.10.88), Par. No. [0043] (Family: none) | 1-12 |
| Y | JP 4-20507 A (Daikin Industries, Ltd.), 24 January, 1992 (24.01.92), Claims; page 2, upper right column, line 19 to page 3, upper left column, line 1 & US 1992/5115038 A1 & EP 457255 A2 | 4-8 |
| Y | JP 10-87746 A (Asahi Glass Co., Ltd.), 07 April, 1998 (07.04.98), Par. Nos. [0007], [0008], [0016], [0017] (Family: none) | 4-8 |
| Y | WO 2000/47641 A1 (Daikin Industries, Ltd.), 17 August, 2000 (17.08.00), Page 5, lines 14 to 16 & US 6716942 B1 & EP 1193275 A4 | 4-8 |
| A | JP 54-110285 A (PCUK Products Chimiques Uqine Kuhlmann), 29 August, 1979 (29.08.79), Full text & US 1980/4221757 A1 & US 1981/4291099 A1 & EP 0003449 B1 | 1-12 |

Form PCT/ISA/210 (continuation of second sheet) (April 2005)

EP 1 859 934 A1

**INTERNATIONAL SEARCH REPORT**

International application No.

PCT/JP2006/304759

C (Continuation).   DOCUMENTS CONSIDERED TO BE RELEVANT

| Category* | Citation of document, with indication, where appropriate, of the relevant passages | Relevant to claim No. |
|---|---|---|
| A | JP 57-61524 A  (Mitsui Porikemikaru Kabushiki Kaisha), 14 April, 1982 (14.04.82), Full text (Family: none) | 1-12 |

Form PCT/ISA/210 (continuation of second sheet) (April 2005)

**EP 1 859 934 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09137900 A